# EUROPEAN PATENT APPLICATION

(11) **EP 1 321 265 A1**
(43) Date of publication of application: **25.06.2003**
(21) Application number: 01951990.9
(22) Date of filing: 24.07.2001
(51) Int. Cl.: B29B 11/16, C08J 5/24, F25D 3/10, B29K 105/06

(54) **CARBON FIBER REINFORCED RESIN COMPOSITE MATERIAL FOR USE AT EXTREMELY LOW TEMPERATURE AND PARTITION WALL STRUCTURE**

(30) Priority: 24.07.2000 JP 2000223028
(71) Applicant: Mitsubishi Rayon Co., Ltd., Tokyo 108-8506 (JP); Mitsubishi Heavy Industries, Ltd., Tokyo 100-8315 (JP)
(72) Inventor: MITANI, Kazutami, c/o Mitsubishi Rayon Co., Ltd, Nagoya-shi, Aichi 461-8677 (JP); SAITO, Tadayoshi, c/o Mitsubishi Rayon Co., Ltd, Nagoya-shi, Aichi 461-8677 (JP); YAMASHITA, Masayuki, c/o Mitsubishi Heavy Ind. Ltd, Nagoya-shi, Aichi 455-8515 (JP); KISHIMOTO, Kazuaki, c/o Mitsubishi Heavy Ind. Ltd, Nagoya-shi, Aichi 455-8515 (JP)
(74) Representative: HOFFMANN - EITLE
(86) International application number: JP0106369
(87) International publication number: WO02007942

(57) **Abstract**

The object of the present invention is to provide a carbon-fiber-reinforced resin composite material, and a partition structure using the same, having superior strength and heat resistance, and which do not result in the occurrence of leakage due to cracking even when cooled to low temperatures. In the present invention, a carbon-fiber-reinforced resin composite material is used for which the amount of leakage in a helium gas leak test after loading for 30 minutes at a strain of 6000 µ in liquid hydrogen being 1 x 10⁻⁹ Ncm³/cm²/s or less. The carbon-fiber-reinforced resin composite material is also a carbon-fiber-reinforced resin composite material having an epoxy resin composed of a homogeneous phase for the matrix resin, wherein the glass transition temperature is 150°C or higher, the fracture elongation of a 90° tensile test is 1.2% or more, and which has superior strength and heat resistance and does not result in the occurrence of leakage due to cracking even when cooled to low temperatures.

## Description

### Background of the Invention

### Field of the Invention

The present invention relates to a carbon-fiber-reinforced resin composite material that can be used at extremely low temperatures and partition structure using the same.

The present application is based on a patent application filed in Japan (Japanese Patent Application No. 2000-223028), and the described contents of said Japanese patent application are incorporated as a part of the present description.

### Prior Art

In the past, glass, metals and other homogenous inorganic materials have typically been used as materials for handling liquid nitrogen, liquid hydrogen and other low-temperature materials. For example, aluminum alloy has been used for the fuel tanks used for the liquid hydrogen fuel and liquid oxygen fuel of liquid fuel rockets.

In recent years, however, for the purpose of the realization of return type, completely reusable space rockets, there is a growing need to reduce fuel tank weight. Therefore, extensive studies are being conducted on the realization of fiber-reinforced resin composite materials having superior specific strength and specific modulus of elasticity.

Examples of the use of fiber-reinforced resin composite materials for such low-temperature applications include the development of glass-fiber-reinforced resins for use as liquid helium cooling vessels of superconducting magnets of nuclear magnetic resonance imaging systems.

However, this technology cannot be applied directly to rocket applications since the strength and heat resistance of the equal levels as those for aircraft are required. In consideration of these circumstances, Japanese Unexamined Patent Application, First Publication No. Hei-10-17675 discloses a fiber-reinforced resin composite material used at low temperatures that is composed of a matrix resin, comprised by mixing a multifunctional glycidylamine-based epoxy resin and aromatic amine-based curing agent, and carbon fiber, wherein the content weight ratio of the matrix is 35%, and the thermal contraction rate of the composite material in the direction of lamination is small.

In addition, as an example of a material developed for aircraft, a thermosetting prepreg material that is cured at 180°C and has improved mechanical properties is known that has a constitution similar to that of the above Japanese Unexamined Patent Application, First Publication No. Hei-10-17675.

However, when even this 180°C curing type of thermosetting prepreg was tested by using in the prototype of a low-temperature fuel tank of a reusable rocket currently under development, due to strain caused by contraction resulting from the temperature difference between the production temperature (curing temperature of the matrix resin) and working temperature in the case of being cooled to a low temperature, a phenomenon was observed in which leakage of gas occurred due to the formation of cracks in the matrix resin.

In addition, although the X-33 Project conducted by the National Aeronautics and Space Administration attempted to apply practically the 977-2 high-tenacity epoxy resin of the Fiberite Corp., according to research conducted by the inventors of the present invention, it was determined that there are cases in which significant leakages occur due to the strain load at low temperatures for this material as well.

In order to solve the above problems, the object of the present invention is to provide a carbon-fiber-reinforced resin composite material and a partition structure using the same, having superior strength and heat resistance, and which do not result in the occurrence of leakage due to cracking even when cooled to low temperatures.

### Summary of the Invention

The carbon-fiber-reinforced resin composite material for extremely low temperatures as claimed in claim 1 is characterized by the amount of leakage in a helium gas leak test after loading for 30 minutes at a strain of 6000 µ in liquid hydrogen being 1 x 10⁻⁹ Ncm³/cm²/s or less.

The carbon-fiber-reinforced fiber composite material for extremely low temperatures described in claim 2 is a carbon-fiber-reinforced resin composite material having an epoxy resin composed of a homogeneous phase for the matrix resin, wherein the glass transition temperature is 150°C or higher, and the fracture elongation of a 90° tensile test is 1.2% or more.

In addition, the carbon-fiber-reinforced resin composite material of the present invention is particularly applied to the molding of a partition structure.

### Brief Description of the Drawings

Fig. 1 indicates a test specimen used in a helium gas leak test, with Fig. 1 A being a side view and Fig. 1 B being a front view.
Fig. 2 is a side view showing the method of a helium gas leak test.

### Detailed Description of the Preferred Embodiments

The carbon-fiber-reinforced resin composite material for extremely low temperatures as claimed in claim 1 (to be referred to as the carbon fiber-reinforced composite material or composite material) has an amount of helium gas leakage of 1 x 10⁻⁹ Ncm³/cm²/s or less after being loaded at a strain of 6000 µ in liquid hydrogen.

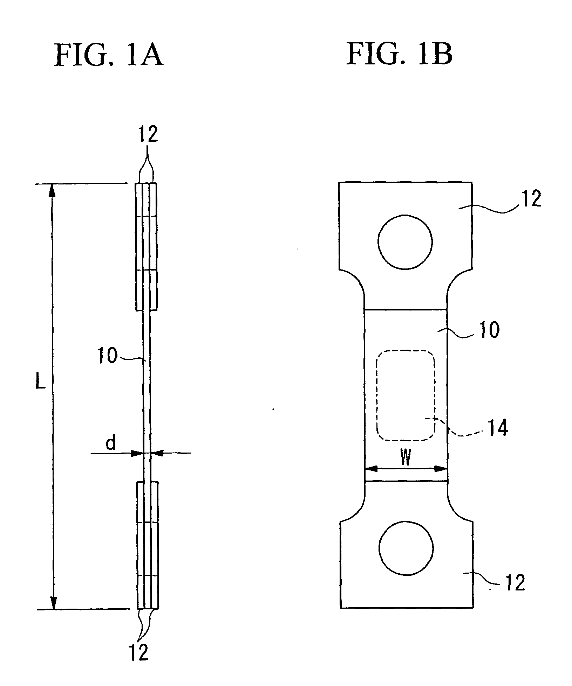

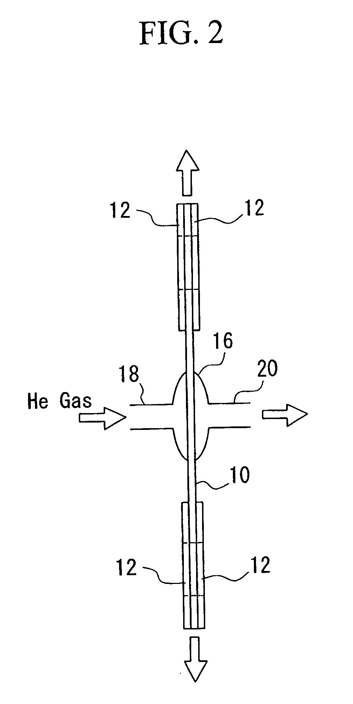

The helium gas leak test in the present invention is carried out in the manner described below.
(1) As shown in Fig. 1, a broad-width dumbbell test specimen 10 having quasi-isotropic lamination [45/0/-45/90] s of a thickness d of 1.1 mm, length L of 280 mm and width W of 90 mm is molded using the target material.
(2)While applying a prescribed strain to this test specimen 10 by tensile loading by clamping both ends with chuck 12 (room temperature: 25°C), leak assessment section 14, having an area of 15 cm² and located in the center of the test specimen, is covered with test jig 16 composed of a feed pipe 18 and aspiration pipe 20 as shown in Fig. 2. Next, together with pressurizing to 0.5 MPa with helium gas from feed pipe 18 connected to a helium gas tank, the helium gas is aspirated by aspiration pipe 20 connected to a helium gas detector having an aspiration function, followed by measurement of the amount of leakage of helium gas that passes test specimen 10.
   In this manner, the initial amount of helium gas leakage is confirmed to be equal or less than a significant detection limit (background noise level: 1 x 10⁻⁹ Ncm³/cm²/s).
(3)Next, the test specimen is immersed in liquid hydrogen and held there for 30 minutes while applying the same prescribed strain as previously mentioned.
(4)Subsequently, the test specimen is returned to room temperature, and the amount of helium gas leakage is measured in the same manner as the initial measurement value while applying the same prescribed strain as previously mentioned, and this value is taken to be the amount of helium gas leakage following immersion in liquid hydrogen.

Furthermore, in this test, for those test specimens for which a prominent increase in the amount of helium gas leakage following immersion in liquid hydrogen is not observed when first conducting the test using a prescribed strain value of 4500 µ, the test is carried out again using a prescribed strain value of 6000 µ. The value obtained in this manner is then taken to be the amount of helium gas leakage (Ncm³/cm²/s) following loading for 30 minutes at a strain of 6000 µ in liquid hydrogen.

In the case of the composite material as claimed in the present invention, since this composite material is suitable for use at extremely low temperatures as a result of having superior strength and heat resistance while also not resulting in the formation of cracks even when cooled to extremely low temperatures, it is preferable for use as a partition structure that holds an extremely low temperature liquid.

Such a composite material is achieved by being a carbon-fiber-reinforced resin composite material which has an epoxy resin composed of a homogeneous phase as its matrix resin, and which has a glass transition temperature (Tg) of 150°C or higher and a fracture elongation of a 90° tensile test of 1.2% or more.

The carbon fiber composite material of the present invention is composed of carbon fiber and matrix resin.

Although carbon fibers having various values for modulus of elasticity and strength can be used, fibers having a modulus of elasticity of 230 GPa or higher and strength of 4000 MPa or more are preferable as structural materials. In particular, so-called intermediately resilient modulus high strength carbon fibers having a modulus of elasticity of 290-310 GPa and strength of 5100 MPa or more are optimum for structural material applications.

Epoxy resin is preferable for the matrix resin. In particular, epoxy resin having two or more functional groups and consisting primarily of an aromatic skeleton are preferable as epoxy resin. Examples include glycidyl ether-based bifunctional resins having a skeleton of bisphenol A or bisphenol F, glycidyl ether polyfunctional resins having a phenol novolak skeleton, glycidyl amine type tetrafunctional resins which are substituted methylene dianiline, trifunctional epoxy resins which are substituted aminophenol with glycidyl groups. Epoxy resins having an aliphatic skeleton, alicyclic epoxy resins, and monofunctional epoxy resins referred to as reactive diluents can also be suitably used within a range that does not impair the characteristics of the cured resin required in the present invention.

Examples of curing agents that can be used include amine-based curing agents such as dicyandiamides and aromatic skeleton amines such as methylene dianiline, diaminodiphenyl sulfone and phenylenediamine; polyhydric phenol-based curing agents having two or more phenolic OH groups in their molecule such as bisphenol compounds and phenol novolak, and carboxylic anhydride-based curing agents. Among these, diaminodiphenyl sulfone is used preferably from the viewpoint of heat resistance of the cured resin.

With respect to modifier components, polymers soluble in epoxy resin such as polyethersulfone and polyvinylformal can be added within a range that does not cause phase separation after curing.

The matrix resin used in the composite material of the present invention preferably has a homogeneous phase structure. This is because, in the case the matrix resin has a multiphase structure, there is greater susceptibility to uneven distribution of reinforcing fibers in the composite material, resulting in the occurrence of sections having locally high contents of reinforcing fibers, and in the case of being loaded with tensile strain, cracks may form comparatively quickly.

The glass transition temperature is preferably 150°C or higher, and more preferably 170-180°C. If the glass transition temperature is less than 150°C, heat resistance becomes inadequate in aerospace applications, and restrictions result in terms of use at sites where there is the possibility of being exposed to high-temperature conditions.

The rupture elongation in a 90° tensile test is preferably 1.2% or more. If rupture elongation is less than 1.2%, there are cases in which cracks form easily in the matrix due to strain generated due to the difference between the molding temperature and working temperature, and due to strain generated due to external force during use.

The content (RC) of matrix resin present in the carbon-fiber-reinforced resin composite material is preferably 30-35 wt% since this content exhibits suitable composite material characteristics.

The carbon-fiber-reinforced resin composite material of the present invention is preferable for use as a partition structure in particular.

The partition structure referred to in the present invention refers to a structure used for the purpose of confining a liquid in a fixed space, and vessels such as canisters and tanks, as well as piping used for the purpose of transferring liquid and so forth, are included therein. Although vessels are composed with closed surfaces as a general rule, there may be open sections in the case of being used for the purpose of holding a liquid in a gravitational field or inertial field.

Although the partition structure of the present invention is characterized by the structure itself having superior anti-leak characteristics, in order to avoid direct contact with the liquid that is held, and also for the purpose of avoiding exposure to the usage environment and so forth, it can be used with a liner or insulating material composed of metal or resin and so forth on the inner surface or outer surface of the partition structure.

The partition structure of the present invention demonstrates its prominent effects when used under conditions of low temperatures in particular. For example, the partition structure of the present invention is suitable for use in a liquid hydrogen fuel tank or liquid oxygen fuel tank for use in rockets and so forth. If the partition structure of the present invention is used, it is able to demonstrate resistance to crack formation and durability capable of preventing gas leaks even when used in said applications.

Furthermore, various known means can be applied for the production method of a molded article of the carbon-fiber-reinforced resin composite material and/or partition structure and so forth, examples of which include the hand lay up method, spray up method, cold press method, matched metal die method, and filament winding method.

The following provides a more detailed explanation of the present invention through its embodiments.

### Examples

### Example 1

A prepreg in which the carbon fiber was "MR50K" and the matrix resin was "#1063EX" (Mitsubishi Rayon) was laminated by the hand lay up method, and then cured under conditions of 177°C and 0.69 MPa using an autoclave.

"MR50K" is a carbon fiber having a modulus of elasticity of 290 GPa and strength of 4410 MPa. "#1063EX" is an aromatic amine-cured epoxy resin that combines the use of trifunctional, bifunctional and tetrafunctional epoxy resins. The resin content (RC) in this carbon-fiber-reinforced resin composite material was 32 wt%.

The 90° tensile rupture elongation and glass transition temperature were measured for this cured product, the phase structure of the matrix resin was observed, and a helium gas leak test was performed.

### * 90° Tensile Test

A composite material comprised of six layers laminated in one direction (total thickness: 0.9 mm) was molded, and a strip-shaped test piece (test piece total length: 229 mm, with glass FRP tapered tab) was prepared having a width of 12.7 mm and gauge length of 127 mm so as to apply the load perpendicular to the direction of the reinforcing fibers, followed by measurement with an Instron universal tester. Tensile rupture elongation (%) was detected by a foil resistance-type strain gauge affixed to the center of gauge length portion.

### * Measurement of Glass Transition Temperature Tg

The glass transition temperature of the composite material was measured according to the expansion method using the thermomechanical analyzer of TA Instruments Inc.

### * Observation of Matrix Resin Phase Structure

A cross-section of the composite material was polished and observed with an optical microscope at a magnification of 250X to determine whether or not a phase separation structure is seen in the matrix resin.

### * Helium Gas Leak Test

A prescribed broad-width dumbbell test specimen was molded, and the amount of helium gas leakage was measured while applying strain of 4500 µ (room temperature: 25°C). Next, the test specimen was immersed in liquid hydrogen and held for 30 minutes while applying strain of 4500 µ. Subsequently, a temperature of the test specimen was raised to room temperature, and the amount of helium gas leakage was measured at a strain of 4500 µ.

Since the amount of gas leakage at a strain of 6000 µ inevitably tends to be greater than that at a strain of 4500 µ, those test specimens for which a remarkable increase in the amount of helium gas leakage due to immersion in liquid hydrogen at a strain of 4500 µ was not observed were tested again wherein the strain was changed from 4500 µ to 6000 µ.

### Comparative Example 1

The 90° tensile rupture elongation, glass transition temperature, phase structure of the matrix resin, and helium gas leak test were evaluated for a carbon-fiber-reinforced resin composite material in the same manner as the above example with the exception of using IM7 / 977-2 (Cytec-Fiberite) for the reinforcing fibers / matrix resin, respectively.

### Comparative Example 2

The 90° tensile rupture elongation, glass transition temperature, phase structure of the matrix resin, and helium gas leak test were evaluated for a carbon-fiber-reinforced resin composite material in the same manner as the above example with the exception of using IM600 / 133 (Toho Rayon) for the carbon-fiber-reinforced resin composite material.

### Comparative Example 3

The 90° tensile rupture elongation, glass transition temperature, phase structure of the matrix resin, and helium gas leak test were evaluated for a carbon-fiber-reinforced resin composite material in the same manner as the above example with the exception of using T800H / 3900-2 (Toray) for the carbon-fiber-reinforced resin composite material.

**Table 1**

| | Example | Comp. Ex. 1 | Comp. Ex. 2 | Comp. Ex. 3 |
|---|---|---|---|---|
| Reinforcing fibers | MR50K | IM7 | IM600 | T800H |
| Matrix resin | #1063EX | 977-2 | 133 | 3900-2 |
| Manufacturer | Mitsubishi Rayon | Cytec-Fiberite | Toho Rayon | Toray |
| 90° tensile rupture elongation | 1.2% | 1.1% | 0.91% | -- |
| Glass transition temperature | 175°C | 161°C | 175°C | 215°C |
| Matrix resin phase structure | Homogeneous phase | Homogeneous phase | Homogeneous phase | Particulate matter of 10-60 µm unevenly distributed |
| | | | | between prepreg layers |
| Amount of helium gas leakage (units: Ncm³/cm²/s) | | | | |
| During strain of 4500 µ | Below detection limit | Below detection limit | 2.0 x 10⁻⁶ | 6.4 x 10⁻⁸ |
| During strain of 6000 µ | Below detection limit | 1.6 x 10⁻⁶ | Not performed | Not performed |

As is clear from Table 1, in the case of the carbon-fiber-reinforced resin composite material of the present example, leakage of helium gas was not detected even after loading with a strain of 6000 µ in liquid hydrogen.

However, in the case of the carbon-fiber-reinforced resin composite material of Comparative Example 1, although leakage of helium gas was not detected after loading with a strain of 4500 µ in liquid hydrogen, after loading with a strain of 6000 µ in liquid hydrogen, remarkable leakage of helium gas was detected. In addition, in the case of the carbon-fiber-reinforced resin composite material of Comparative Example 2, remarkable leakage of helium gas was detected after loading with a strain of 4500 µ in liquid hydrogen. In the case of the carbon-fiber-reinforced resin composite material of Comparative Example 3 as well, remarkable leakage of helium gas was detected after loading with a strain of 4500 µ in liquid hydrogen.

### INDUSTRIAL APPLICABILITY

Since the carbon-fiber-reinforced resin composite material for extremely low temperatures of the present invention has superior mechanical properties and heat resistance without resulting in the formation of cracks and occurrence of leakages even when loaded with strain at low temperatures, it can be used as a structural material at sites subjected to extremely low temperatures used in the field of aerospace.

In addition, the carbon-fiber-reinforced resin composite material of the present invention is particularly suited for the molding of a partition structure.

## Claims

1. A carbon-fiber-reinforced resin composite material for extremely low temperatures **characterized in that** the amount of leakage in a helium gas leak test after loading for 30 minutes at a strain of 6000 µ in liquid hydrogen is 1 x 10⁻⁹ Ncm³/cm²/s or less.

2. A carbon-fiber-reinforced fiber composite material for extremely low temperatures **characterized in that** it has an epoxy resin composed of a homogeneous phase as the matrix resin, wherein the glass transition temperature is 150°C or higher, and the fracture elongation of a 90° tensile test is 1.2% or more.

3. A partition structure **characterized in that** it is molded using the carbon fiber-reinforced fiber composite material for extremely low temperatures according to claim 1.

4. A partition structure **characterized in that** it is molded using the carbon fiber-reinforced fiber composite material for extremely low temperatures according to claim 2.
